# EUROPÄISCHE PATENTANMELDUNG

(11) **EP 4 507 155 A1**
(43) Veröffentlichungstag der Anmeldung: **12.02.2025**
(21) Anmeldenummer: 23190256.0
(22) Anmeldetag: 08.08.2023
(51) Int. Cl.: H02J 7/00

(54) **ADAPTIVE REGELUNG FÜR EINEN VERBUND VON AKKUMULATOREN**

(71) Anmelder: Hilti Aktiengesellschaft, 9494 Schaan (LI)
(72) Erfinder: Hartmann, Markus, 87665 Mauerstetten (DE); Hauser, Klaus, 86830 Schwabmünchen (DE); Braun, Philipp, 77654 Offenburg (DE); Seltmann, Daniel, 86899 Landsberg am Lech (DE); Ender, Moses, 86916 Kaufering (DE); Britz, Rory, 82319 Starnberg (DE); Frenzel, Mathias, 86944 Unterdießen (DE); Stanger, Robert, 87600 Kaufbeuren (DE)
(74) Vertreter: Hilti Aktiengesellschaft Corporate Intellectual Property

(57) **Zusammenfassung**

Verfahren zum Steuern und Regeln eines Systems enthaltend wenigstens einen ersten Akkumulator mit einem ersten Transceiver und einer ersten Speichereinheit, einen zweiten Akkumulator mit einem zweiten Transceiver und einer zweiten Speichereinheit, eine erste Ladevorrichtung mit einer dritten Transceiver sowie eine zweite Ladevorrichtung mit einer vierten Transceiver, wobei jeder Akkumulator wenigstens einen Sensor zum Erfassen wenigstens eines Parameters enthält.

System zur Durchführung des Verfahrens enthaltend wenigstens einen ersten und zweiten Akkumulator, wenigstens eine erste und zweite Ladevorrichtung sowie wenigstens eine erste und zweite Werkzeugmaschine, wobei der erste und zweite Akkumulator jeweils einen ersten Transceiver und eine erste Speichereinheit, die erste und zweite Ladevorrichtung jeweils einen zweiten Transceiver und eine zweite Speichereinheit sowie die erste und zweite Werkzeugmaschine jeweils einen dritten Transceiver und eine dritte Speichereinheit enthält.

## Beschreibung

Die vorliegende Erfindung betrifft ein Verfahren zum Steuern und Regeln eines Systems enthaltend wenigstens einen ersten Akkumulator mit einem ersten Transceiver und einer ersten Speichereinheit, einen zweiten Akkumulator mit einem zweiten Transceiver und einer zweiten Speichereinheit, eine erste Ladevorrichtung mit einer dritten Transceiver sowie eine zweite Ladevorrichtung mit einer vierten Transceiver, wobei jeder Akkumulator wenigstens einen Sensor zum Erfassen wenigstens eines Parameters enthält.

Des Weiteren betrifft die Erfindung ein System zur Durchführung des Verfahrens enthaltend wenigstens einen ersten und zweiten Akkumulator, wenigstens eine erste und zweite Ladevorrichtung sowie wenigstens eine erste und zweite Werkzeugmaschine, wobei der erste und zweite Akkumulator jeweils einen ersten Transceiver und eine erste Speichereinheit, die erste und zweite Ladevorrichtung jeweils einen zweiten Transceiver und eine zweite Speichereinheit sowie die erste und zweite Werkzeugmaschine jeweils einen dritten Transceiver und eine dritte Speichereinheit enthält.

Akkumulatoren (auch Akku genannt) als Energieversorgung für eine Werkzeugmaschine sind gemäß dem Stand der Technik weitgehend bekannt. Diese Akkumulator enthalten für gewöhnlich eine Anzahl an Energiespeicherzellen (auch Akkuzellen genannt), die zum Aufnehmen, Speichern sowie Abgeben von elektrischer Energie dienen und ausgestaltet sind. Das Aufnehmen von elektrischer Energie in die Energiespeicherzellen kann auch als Laden (bzw. Aufladen) bezeichnet werden. Das Abgeben von elektrischer Energie aus den Energiespeicherzellen kann auch als Entladen bezeichnet werden.

Zum Aufladen bzw. Laden mit elektrischer Energie wird der Akkumulator für gewöhnlich mit einer Ladeeinrichtung (auch Lader oder Charger genannt) verbunden. Die Ladeeinrichtung leitet elektrische Energie gemäß einer vorbestimmten Ladeeinstellung (auch Lademodus genannt) mit festgelegten Parametern für den eigentlichen Ladevorgang an die einzelnen Energiespeicherzellen der Akkumulators.

Um ein nahezu optimales Laden eines Akkumulators mit elektrischer Energie sowie ein nahezu bestmögliches Entladen des Akkumulators (d.h. die erneute Abgabe der in dem Akkumulator gespeicherten Energie an beispielsweise eine Werkzeugmaschine) zu erreichen, sollten die Parameter des Akkumulators zwischen minimalen und maximalen Schwellwerten befinden. Ein Betreiben, d.h. das Laden und auch Entladen, eines Akkumulators außerhalb der Schwellwerte kann dabei zu wesentlich längeren Ladezeiten, einer geringeren Kapazität und/oder einem niedrigeren Entladestromwert führen.

Das Einhalten der Parameter des Akkumulators im Idealbereich bzw. zwischen den Schwellwerten ist insbesondere bei dem Außeneinsatz der Akkumulatoren und bei extremen Wetterverhältnissen nur schwer zu ermöglichen.

Aufgabe der vorliegenden Erfindung ist das vorstehend beschriebene Problem zu lösen.

Die Aufgabe wird ebenfalls gelöst durch den Gegenstand des Anspruchs 1 sowie durch den Gegenstand des Anspruchs 4. Weitere vorteilhafte Ausführungen der Erfindung sind in den entsprechenden Unteransprüchen beschrieben.

Die Aufgabe wird insbesondere gelöst durch ein Verfahren zum Steuern und Regeln eines Systems enthaltend wenigstens einen ersten Akkumulator mit einem ersten Transceiver und einer ersten Speichereinheit, einen zweiten Akkumulator mit einem zweiten Transceiver und einer zweiten Speichereinheit, eine erste Ladevorrichtung mit einer dritten Transceiver sowie eine zweite Ladevorrichtung mit einer vierten Transceiver, wobei jeder Akkumulator wenigstens einen Sensor zum Erfassen wenigstens eines Parameters enthält.

Erfindungsgemäß sind die folgenden Verfahrensschritte vorgesehen
- Erfassen wenigstens eines Betriebskennwertes durch den wenigstens einen Sensor eines jeweiligen Akkumulators;
- Verbinden des wenigstens ersten Akkumulators mit der ersten Ladevorrichtung und Verbinden des wenigstens zweiten Akkumulators mit der zweiten Ladevorrichtung;
- Aussenden wenigstens eines von dem Sensor erfassten Betriebskennwertes des ersten Akkumulators von dem ersten Akkumulator an die erste Ladevorrichtung vor Beginn eines Ladevorgangs sowie Aussenden wenigstens eines von dem Sensor erfassten Betriebskennwertes des zweiten Akkumulators von dem zweiten Akkumulator an die zweite Ladevorrichtung vor Beginn eines Ladevorgangs;
- Senden des wenigstens einen Betriebskennwertes des ersten Akkumulators von der ersten Ladevorrichtung an eine Datenspeicher- und Rechenvorrichtung sowie Senden des wenigstens einen Betriebskennwertes des zweiten Akkumulators von der zweiten Ladevorrichtung an die Datenspeicher- und Rechenvorrichtung;
- Vergleichen der Parameter des ersten und zweiten Akkumulators mit in der Datenspeicher- und Rechenvorrichtung gespeicherten Schwellwerten;
- Vergleichen der jeweiligen Betriebskennwerte mit einem in der Datenspeicher- und Rechenvorrichtung gespeicherten Schwellwert;
- Senden wenigstens eines zweiten Regelparameters von der Datenspeicher- und Rechenvorrichtung über die Ladevorrichtung zu dem ersten und/oder zweiten Akkumulator zum Ersetzen eines entsprechend in dem ersten und/oder zweiten Akkumulator gespeicherten ersten Regelparameters, wenn für eine vorbestimmte Zeitdauer und Menge wenigstens ein Betriebskennwert einen in der Datenspeicher- und Rechenvorrichtung gespeicherten Schwellwert übersteigt; und
- Laden wenigstens eines Akkumulators mit elektrischer Energie durch die Ladevorrichtung mit wenigstens dem zweiten Regelparameter.

Gemäß einer vorteilhaften Ausführungsform kann es möglich sein, dass die Verfahrensschritte
- Aussenden wenigstens eines ersten Regelparameters des Akkumulators von dem Akkumulator an die Ladevorrichtung vor Beginn eines Ladevorgangs enthalten sind.

Entsprechend einer vorteilhaften Ausführungsform kann es ebenfalls möglich sein, dass die Verfahrensschritte
- Verbinden des wenigstens ersten oder zweiten Akkumulator mit einer Werkzeugmaschine;
- Versorgen der Werkzeugmaschine mit elektrischer Energie durch ein Entladen des wenigstens ersten oder zweiten Akkumulator mit wenigstens dem zweiten Regelparameter enthalten sind.

Die Aufgabe wird des Weiteren gelöst durch ein System zur Durchführung des Verfahrens enthaltend wenigstens einen ersten und zweiten Akkumulator, wenigstens eine erste und zweite Ladevorrichtung sowie wenigstens eine erste und zweite Werkzeugmaschine, wobei der erste und zweite Akkumulator jeweils einen ersten Transceiver und eine erste Speichereinheit, die erste und zweite Ladevorrichtung jeweils einen zweiten Transceiver und eine zweite Speichereinheit sowie die erste und zweite Werkzeugmaschine jeweils einen dritten Transceiver und eine dritte Speichereinheit enthält.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Figur 1: eine Seitenansicht auf eine Werkzeugmaschine mit einem Akkumulator gemäß einem ersten Ausführungsbeispiel;

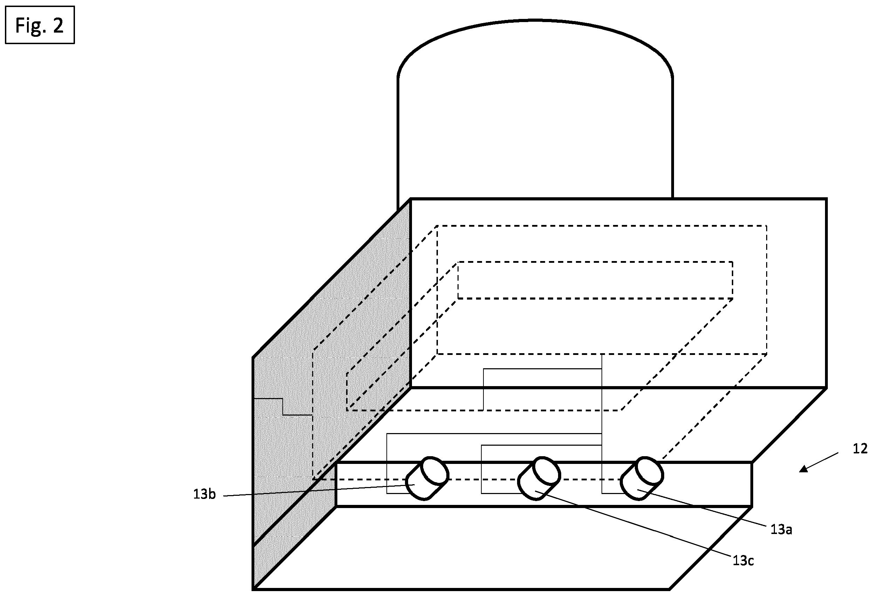

- Figur 2: eine perspektivische Ansicht auf eine Schnittstelle der Werkzeugmaschine;

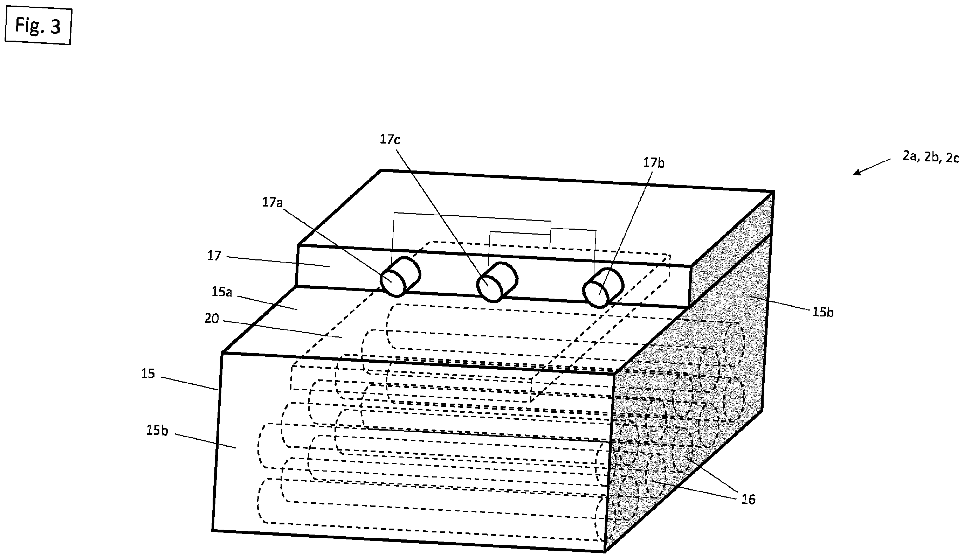

- Figur 3: eine perspektivische Ansicht auf den Akkumulator;
- Figur 4: perspektivische Ansicht auf eine Ladevorrichtung; und
- Figur 5: eine schematische Ansicht auf ein System mit einer ersten Werkzeugmaschine mit einem ersten Akkumulator, einer zweiten Werkzeugmaschine mit einem ersten Akkumulator, einer dritten Werkzeugmaschine mit einem dritten Akkumulator, einer ersten Ladevorrichtung, mit welcher der erste Akkumulator verbunden werden kann, einer zweiten Ladevorrichtung, mit welcher der zweite Akkumulator verbunden werden kann, einer dritten Ladevorrichtung, mit welcher der dritte Akkumulator verbunden werden kann sowie einer Datenspeicher- und Rechenvorrichtung.

### Ausführungsbeispiele:

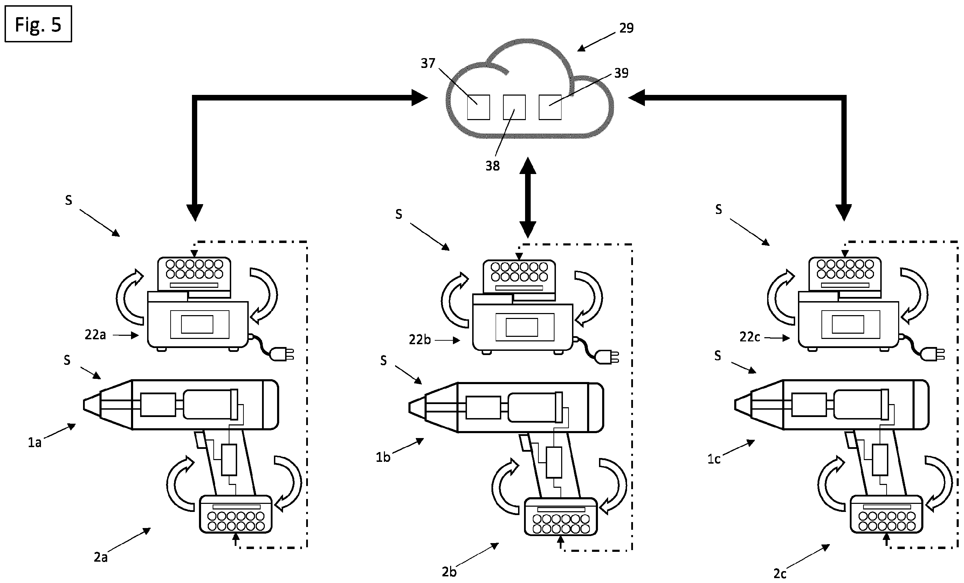

Figur 5 zeigt ein System S mit einer ersten, zweiten und dritten Werkzeugmaschine 1a, 1b, 1c jeweils verbunden mit einem ersten, zweiten und dritten Akkumulator 2a, 2b, 2c sowie eine erste, zweite und dritte Ladevorrichtung 22a, 22b, 22c. Die Werkzeugmaschinen 1a, 1b, 1c, Akkumulatoren 2a, 2b, 2c und Ladevorrichtungen 22a, 22b, 22c sind in dem vorliegenden Ausführungsbeispiel im Wesentlichen baugleich ausgestaltet.

Alternativ kann das System S auch mehr oder weniger als drei Werkzeugmaschinen, Ladevorrichtungen und Akkumulatoren enthalten.

In dem vorliegenden Ausführungsbeispiel sind dabei die Werkzeugmaschinen 1a, 1b, 1c beispielhaft als Akku-Schrauber ausgestaltet. Die Werkzeugmaschinen 1a, 1b, 1c können auch als Bohrmaschinen, Bohrhammer, Sägen, Schleifgeräte oder dergleichen ausgestaltet sein.

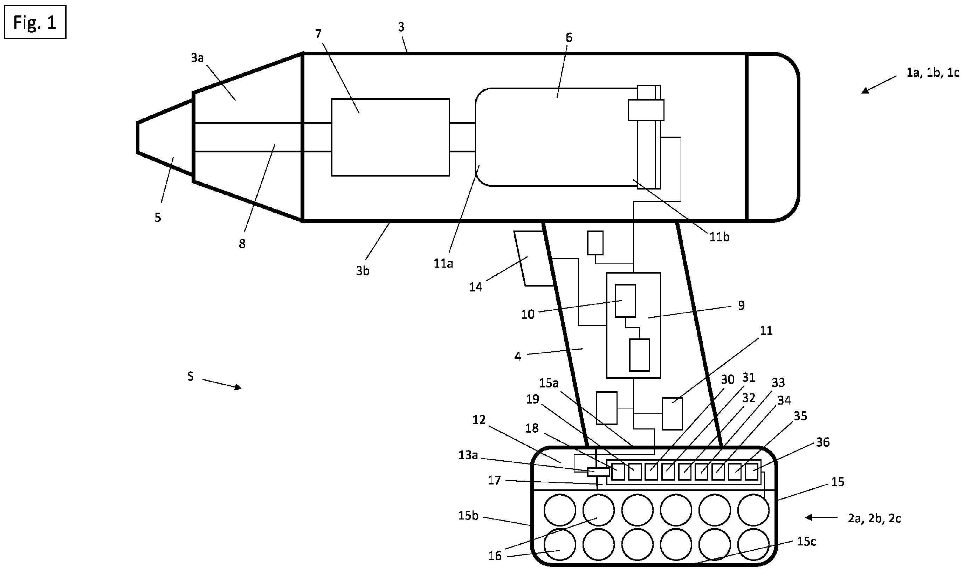

Wie in Figur 1 angedeutet enthält jede Werkzeugmaschine 1a, 1b, 1c im Wesentlichen ein Gehäuse 3, einen Handgriff 4 und eine Werkzeugaufnahme 5. Im Inneren des Gehäuses 3 ist ein Antrieb 6 in Form eines Elektromotors, eine Getriebevorrichtung 7, eine Abtriebswelle 8, eine Steuerungseinheit 9, eine Speichereinheit 10 und einen Transceiver 11 positioniert.

Der als Elektromotor ausgestaltete Antrieb 6, die Getriebevorrichtung 7 und die Abtriebswelle 8 sind dabei so zueinander angeordnet, dass ein von dem Elektromotor 6 erzeugtes Drehmoment über die Abtriebswelle 8 und die Getriebevorrichtung 7 auf die Werkzeugaufnahme 5 übertragbar ist. Die Werkzeugaufnahme 5 ist dazu an einem vorderen Ende 3a des Gehäuses 3 positioniert und zum Aufnehmen sowie Halten eines Werkzeug. Im Ausführungsfall eines Akku-Schraubers kann das Werkzeug als Schrauber-Bit ausgestaltet sein. In den Figuren ist das Werkzeug nicht dargestellt.

An einer Unterseite 3b des Gehäuses 3 ist der Handgriff 4 positioniert. Der Handgriff 4 ist dabei mit einem ersten Ende 4a an der Unterseite 3b des Gehäuses 3 befestigt. An einem zweiten Ende 4b des Handgriffs 4 ist eine Werkzeugmaschinenschnittstelle 12 positioniert und dient zum elektrischen bzw. elektronischen sowie mechanischen Verbinden der Werkzeugmaschine 1 mit dem Akkumulator 2. Zum elektrischen bzw. elektronischen Verbinden weist die Werkzeugmaschine 1 einen Pluskontakt 13a, einen Minuskontakt 13b und einen Kommunikationskontakt 13c auf. Der Plus- und Minuskontakt 13a, 13b dient zur Erzeugen eines Stromkreises, wenn der Akkumulator 2 mit der Werkzeugmaschine 1 verbunden ist. Der Kommunikationskontakt 13c dient zum Senden und Empfangen von Daten sowie Informationen in Form von elektrischen Signalen.

An einem vorderen Ende 4c des Handgriffs 4 ist ein Betätigungsschalter 14 vorgesehen. Der Betätigungsschalter 14 dient zum Aktivieren des Werkzeugmaschine 1. Im Inneren des Handgriffs 4 ist die Steuerungseinheit 9 mit dem Transceiver 11 und der Speichereinheit 10 positioniert. Mit Hilfe der Steuerungseinheit 9 werden die einzelnen Funktionen der Werkzeugmaschine 1 gesteuert und geregelt. Zu den Funktionen gehören beispielsweise das Einstellen einer bestimmten Drehzahl des Elektromotors 6.

Der Akkumulator 2 kann mit einer Werkzeugmaschine 1 wiederlösbar verbunden werden, um die Werkzeugmaschine 1 mit elektrischer Energie zu versorgen.

Jeder Akkumulator 2 enthält im Wesentlichen ein Akku-Gehäuse 15, eine Anzahl an Energiespeicherzellen 16, eine Akku-Schnittstelle 17, eine Speichereinheit 18, einen Transceiver 19, eine Steuerungseinrichtung 20 sowie eine Vielzahl an Sensoren.

Die Energiespeicherzellen 16 können auch als Akku-Zellen bezeichnet werden und sind im Inneren des Akku-Gehäuses 15 angeordnet.

Das Akku-Gehäuse 15 enthält dabei im Wesentlichen ein Deckelelement 15a, vier Seitenwände 15b und ein Bodenelement 15c.

Die Akku-Schnittstelle 17 ist an der Außenseite des Deckelelements 15a angeordnet und dient zum elektrischen bzw. elektronischen sowie mechanischen Verbinden des Akkumulators 2 mit der Werkzeugmaschine 1 oder einer Ladevorrichtung 22.

Zum elektrischen bzw. elektronischen Verbinden weist die Akku-Schnittstelle 17 einen Pluskontakt 17a, einen Minuskontakt 17b und einen Kommunikationskontakt 17c auf. Der Plus- und Minuskontakt 17a, 17b dient zur Erzeugen eines Stromkreises, wenn der Akkumulator 2 mit einer Werkzeugmaschine 1 oder einer Ladevorrichtung 22 verbunden ist. Der Kommunikationskontakt 17c dient zum Senden und Empfangen von Daten sowie Informationen in Form von elektrischen Signalen.

Alternativ oder zusätzlich kann der Akkumulator 2 auch eine Funkkommunikation (z.B. Bluetooth) bzw. drahtlose Kommunikation enthalten.

Die Energiespeicherzellen 16 dienen zum Aufnehmen, Speichern und erneuten Abgeben elektrischer Energie. Wie in den Figuren angedeutet, sind die Energiespeicherzellen 16 in zylindrischer Form sowie auf Basis einer Lithium-Ionen-Technologie ausgestaltet. Jede Energiespeicherzelle 16 enthält an einem Ende eine Kontakteinrichtung, die zur Übertragung elektrischer Energie dient. Die einzelnen Kontakteinrichtung sind über entsprechende Leitungen mit der Steuerungseinrichtung 20 des Akkumulators 2 verbunden.

Alternativ können die Energiespeicherzellen 16 auch auf einer anderen geeigneten Technologie basieren.

Die zylindrische Form der Energiespeicherzellen 16 ist ebenfalls optional, sodass auch jede andere geeignete Form bzw. Geometrie gewählt werden kann. So ist es insbesondere auch möglich, dass die Energiespeicherzellen als Pouchzellen ausgestaltet sind.

Es ist zudem auch möglich, dass der Akkumulator 2 sowohl zylindrische Energiespeicherzellen als auch Pouch-Zellen enthält. Es ist insbesondere möglich, dass der Akkumulator 2 lediglich eine einzige zylindrische Energiespeicherzelle 16 und eine einzige Pouchzelle enthält.

Die Steuerungseinrichtung 20 regelt und steuert verschiedene Funktionen des Akkumulators 2. Zu den Funktion gehört unter anderen die Steuerung der Aufnahme und Abgabe von elektrischer Energie in bzw. aus den Energiespeicherzellen 16. Darüber hinaus wird mit Hilfe der Steuerungseinrichtung 20 der Menge an elektrischer Energie gesteuert, die von den Energiespeicherzellen 16 aufgenommen oder abgegeben werden sollen.

In der Speichereinheit 18 ist ein erster Regelparametersatz gespeichert, welcher eine Vielzahl an Regelparameter enthält. Die Regelparameter können auch als Regelkenngrößen oder Einstellparameter bezeichnet werden.

Die Speichereinheit 18 ist so mit der Steuerungseinrichtung 20 verbunden, dass die Steuerungseinrichtung 20 auf die einzelnen in der Speichereinheit 18 gespeicherten Regelparameter zugreifen kann und anhand dieser Regelparameter die Funktionen des Akkumulators 2 gesteuert bzw. geregelt werden können. Zu den Regelparametern gehören maximale Entladeströme (Stromstärkewert), maximale Ladeströme (Stromstärkewert), minimale und maximale Ladezeiten, minimale und maximale Innenwiderstände sowie minimale und maximale Kapazitätswerte (in Ah)

Zu den Regelparametern gehören darüber hinaus auch Verfahren zur Reduzierung oder vollständigen Blockade der Energieaufnahme oder -abgabe durch die Energiespeicherzellen 16 im Falle eines maximalen Beschleunigungswerts bzw. Bremswerts, einer vorbestimmten Anzahl an Bremswerten innerhalb von vorbestimmten Schwellwerten sowie minimalen und maximalen Temperaturwerten.

Der Akkumulator 2 enthält des Weiteren jeweils einen Sensor zum Erfassen von Betriebskennwerten. Die Betriebskennwerte können auch als Betriebsparameter, Betriebskenngrößen oder Betriebsgrößen bezeichnet werden.

Insbesondere enthält der Akkumulator 2 dabei einen Sensor zum Erfassen einer Ladestromstärke und Entladestromstärke 30, einen Sensor zum Erfassen einer Ladezeit 31, einen Sensor zum Erfassen eines Beschleunigungswerts und Bremswertes 32, einen Sensor zum Erfassen von Temperaturwerten 33, einen Sensor zum Erfassen von Innenwiderstandswerten 34, einen Sensor zum Erfassen der Kapazität 35 sowie ein Zählwerk 36 für die Anzahl an Beschleunigungswerten, welche einen vorbestimmten Schwellwert überschreiten.

Der Sensor zum Erfassen einer Ladezeit 31 kann auch als Uhr oder Real-Time Clock bezeichnet werden.

Der Beschleunigungswert kann als Wert für eine positive Beschleunigung und der Bremswert kann auch als Wert für eine negative Beschleunigung bezeichnet werden.

Der Sensor zum Erfassen von Temperaturwerten 33 kann auch als Thermometer oder Temperaturmesser bezeichnet werden.

Der Sensor zum Erfassen von Innenwiderstandswerten 34 kann auch als Ohmmeter bezeichnet werden.

Der Sensor zum Erfassen der Kapazität 35 kann auch als Sensor zum Erfassen der Amperestunden (Ah) bezeichnet werden.

Gemäß einer alternativen Ausführungsform des System bzw. des Akkumulators 2 ist möglich, dass weitere oder weniger Sensoren in dem Akkumulator 2 enthalten sind.

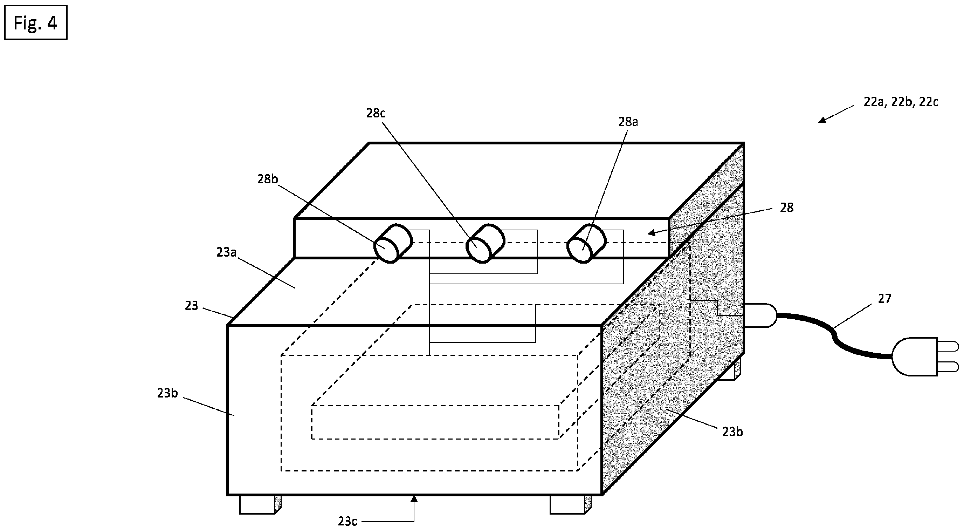

In Figur 4 ist eine Ladevorrichtung 22 gezeigt, welche im Wesentlichen ein Ladergehäuse 23, eine Steuereinheit 24, einen Transceiver 25, eine Speichereinheit 26 und eine Energieversorgung 27 enthält. Das Ladergehäuse 23 enthält dabei im Wesentlichen ein Deckelelement 23a, vier Seitenwände 23b und ein Bodenelement 23c.

An dem Deckelelement 23a ist eine Laderschnittstelle 28 positioniert und dient zum elektrischen bzw. elektronischen sowie mechanischen Verbinden der Ladevorrichtung 22 mit dem Akkumulator 2. Zum elektrischen bzw. elektronischen Verbinden weist die Laderschnittstelle 28 einen Pluskontakt 28a, einen Minuskontakt 28b und einen Kommunikationskontakt 28c auf. Der Plus- und Minuskontakt 28a, 28b dient zur Erzeugen eines Stromkreises, wenn der Akkumulator 2 mit der Ladevorrichtung 22 verbunden ist. Der Kommunikationskontakt 28c dient zum Senden und Empfangen von Daten sowie Informationen in Form von elektrischen Signalen.

Alternativ oder zusätzlich kann die Ladevorrichtung 22 auch eine Funkkommunikation (z.B. Bluetooth) bzw. drahtlose Kommunikation enthalten.

Die Energieversorgung 27 ist in Form eines Stromkabels zum Verbinden mit einer nicht gezeigten Netzstromquelle (d.h. Steckdose) ausgestaltet.

Im Inneren des Ladergehäuses 23 ist die Steuereinheit 24, der Transceiver 25 und die Speichereinheit 26 positioniert. Die Steuereinheit 24 steuert und regelt die einzelnen Funktionen der Ladevorrichtung 22. Zu diesen Funktionen gehören unter anderen die Einstellung eines Ladestroms (d.h. der Stromstärkewert), wenn ein Akkumulator 2 zum Laden mit der Ladevorrichtung 22 wiederlösbar verbunden ist. Der Transceiver 25 dient zum Senden und Empfangen von Daten sowie Informationen in Form von elektrischen Signalen.

Wie in Figur 5 angedeutet, ist die Ladevorrichtung 22 insbesondere dazu ausgestaltet mit einer Datenspeicher- und Rechenvorrichtung 29 Daten sowie Informationen auszutauschen. Die Datenspeicher- und Rechenvorrichtung 29 enthält einen Transceiver 37, eine Recheneinheit 38 sowie eine Speichereinheit 39.

Die Datenspeicher- und Rechenvorrichtung 29 kann auch als Cloud bzw. Cloud-Rechner bezeichnet werden.

Zur Durchführung des Verfahrens ist der Akkumulator 2 zunächst mit der Werkzeugmaschine 1 verbunden, sodass elektrische Energie von den Energiespeicherzelle 16 zu den Verbrauchern der Werkzeugmaschine 1 gelangen kann, vgl. Figur 1. Die jeweiligen Schnittstellen des Akkumulators 2 sowie der Werkzeugmaschine 1 sind dabei wiederlösbar miteinander verbunden. Durch die Verbindung des Akkumulators 2 mit der Werkzeugmaschine 1 können auch Daten und Informationen in Form von elektrischen Signalen zwischen dem Akkumulator 2 und der Werkzeugmaschine 1 ausgetauscht werden. Zum Senden und Empfangen der elektrischen Signale dienen die jeweiligen Transceiver 19, 25 sowie die jeweils miteinander verbundenen Kommunikationskontakte 13c, 17c, des Akkumulators 2 und der Werkzeugmaschine 1.

Während der Verwendung des Akkumulators 2 als Energieversorgung der Werkzeugmaschine 1 erfassen die Sensoren des Akkumulators 2 die vorstehend erwähnten verschiedenen Betriebskennwerte. Es ist möglich, dass lediglich ein Teil der Sensoren Daten erfassen. Die von den Sensoren erfassten Betriebskennwerte werden in der Speichereinheit gespeichert.

Wie in Figur 5 angedeutet, kann ein Akkumulator 2 von einer jeweiligen Werkzeugmaschine 1 entnommen und mit einer Ladevorrichtung 22 wiederlösbar verbunden werden. Die Energiespeicherzellen 16 des Akkumulators 2 können mit Hilfe der Ladevorrichtung mit elektrischer Energie geladen werden.

In dem vorliegenden Ausführungsbeispiel ist angedeutet, dass der erste, zweite und dritte Akkumulator 2a, 2b, 2c zeitgleich von der jeweiligen Werkzeugmaschine 1a, 1b, 1c entnommen und mit den jeweiligen Ladevorrichtungen 22a, 22b, 22c verbunden werden. Es ist jedoch auch möglich, dass die Akkumulatoren2a, 2b, 2c nicht zeitgleich von den Werkzeugmaschinen und mit den Ladevorrichtungen entnommen werden. Die Entnahme der einzelnen Akkumulatoren 2a, 2b, 2c von den Werkzeugmaschinen 1a, 1b, 1c und das Verbinden der einzelnen Akkumulatoren 2a, 2b, 2c mit den jeweiligen Ladevorrichtungen 22a, 22b, 22c kann für jeden Akkumulator 2a, 2b, 2c für sich geschehen, sodass die Entnahme aller Akkumulatoren 2a, 2b, 2c von den Werkzeugmaschinen 1a, 1b, 1c und das Verbinden mit den Ladevorrichtungen 22a, 22b, 22c innerhalb einer bestimmten Zeitdauer geschehen. Die Zeitdauer kann dabei mehrere Stunden oder Tage betragen.

Es ist zudem auch möglich, dass mehr als ein Akkumulator mit einer einzigen Ladevorrichtung wiederholt verbunden wird.

Des Weiteren ist es auch möglich, dass ein Akkumulator 2a, 2b, 2c abwechselnd mit unterschiedlichen Ladevorrichtungen 22a, 22b, 22c verbunden wird.

Die jeweiligen Schnittstellen des Akkumulators 2a, 2b, 2c sowie der Ladevorrichtung 22a, 22b, 22c sind dabei wiederlösbar miteinander so kontaktiert, dass die jeweiligen Kommunikationskontakte 17c, 28c des Akkumulators 2 und der Ladevorrichtung 22 miteinander in Kontakt stehen. Durch die Verbindung des Akkumulators 2 mit der Ladevorrichtung 22 können auch Daten und Informationen in Form von elektrischen Signalen zwischen dem Akkumulator 2 und der Ladevorrichtung 22 ausgetauscht werden. Zum Senden und Empfangen der elektrischen Signale dienen die jeweiligen Transceiver 19, 25 des Akkumulators 2 und der Ladevorrichtung 22.

Vor Beginn des eigentlichen Ladevorgangs, d.h. bevor elektrische Energie von der Ladevorrichtung 22 zu den Energiespeicherzellen 16 des Akkumulators 2 gelangt, sendet der Akkumulator 2 die in der Speichereinheit 18 hinterlegten Betriebskennwerte mit Hilfe der Transceiver 19, 25 und Kommunikationskontakte 17c, 28c an die Ladevorrichtung 22.

Es ist dabei möglich, dass lediglich ein einziger Betriebskennwert an die Ladevorrichtung 22 gesendet wird, auch wenn mehr als ein Betriebskennwert von den Sensoren erfasst wurden. Die Ladevorrichtung 22 speichert die empfangenen Betriebskennwerte in der Speichereinheit 26 der Ladevorrichtung 22.

Wenn die Ladevorrichtung 22 mit der Datenspeicher- und Rechenvorrichtung 29 verbunden ist, werden die Betriebskennwerte an die Datenspeicher- und Rechenvorrichtung 29 gesendet. Jede Ladevorrichtung 22 sendet dabei empfangene Betriebskennwerte an die Datenspeicher- und Rechenvorrichtung 29 sobald die entsprechende Ladevorrichtung 22 mit der Datenspeicher- und Rechenvorrichtung 29 verbunden ist.

In der Datenspeicher- und Rechenvorrichtung 29 sind Schwellwerte für die entsprechenden Betriebskennwert hinterlegt, die von den Sensoren des Akkumulators 2 erfasst werden.

Des Weiteren sind in der Datenspeicher- und Rechenvorrichtung 29 einzelne Regelparameter sowie vollständige Regelparametersätze für eine Vielzahl von unterschiedlichen Akkumulatoren 2 gespeichert.

In der Datenspeicher- und Rechenvorrichtung 29 wird für eine vorbestimmte Zeitdauer eine vorbestimmte Menge an Betriebskennwerte derselben Kategorie gesammelt. Das Sammeln von Betriebskennwerten derselben Kategorie innerhalb einer gewissen Zeitdauer dient einer möglichst umfassenden Darstellung der jeweiligen Betriebszustände aller zum System S gehörenden Akkumulatoren 2a, 2b, 2c. Je größer die Menge an gesammelten Betriebskennwerten, desto eindeutiger kann die Darstellung und auch Deutung der jeweiligen Betriebszustände der Akkumulatoren 2a, 2b, 2c erfolgen. Bei der vorbestimmten Zeitdauer kann es sich dabei um Stunden oder Tage handeln. Bei der vorbestimmten Menge oder Anzahl an Betriebskennwerten kann es sich um Duzende oder auch Hunderte von Betriebskennwerten derselben Kategorie handeln.

Die gesammelten Betriebskennwerte werden in der Datenspeicher- und Rechenvorrichtung 29 mit den jeweiligen Schwellwerten verglichen. Wenn die für dem vorbestimmte Zeitdauer und für die vorbestimmte Menge bzw. Anzahl ein Betriebskennwert einer Kategorie einen entsprechenden Schwellwert übersteigt, wird ein neuer Regelparameter von der Datenspeicher- und Rechenvorrichtung 29 an alle Ladevorrichtungen 22a, 22b, 22c gesendet.

Der neue Regelparameter wird anschließend von der Ladevorrichtung 22a, 22b, 22c zu dem jeweils verbundenen Akkumulator 2a. 2b, 2c gesendet. Es ist zudem möglich, dass der neue Regelparameter in der Ladevorrichtung 22a, 22b, 22c gespeichert wird und an unterschiedliche Akkumulatoren 2a, 2b, 2c gesendet wird, die nachfolgend mit der Ladevorrichtung 22a, 22b, 22c verbunden sind.

In der Steuerungseinrichtung des Akkumulators 2a. 2b, 2c wird der empfangene neue Regelparameter verwendet, um einen korrespondierenden Regelparameter zu ersetzen. Dieser korrespondierende Regelparameter kann auch als bisheriger oder alter Regelparameter bezeichnet werden.

Gemäß eines alternativen Ausführungsbeispiels kann es auch möglich sein, dass mehr als ein einziger neuer Regelparameter von der Datenspeicher- und Rechenvorrichtung 29 an die Ladevorrichtung 22a. 22b, 22c gesendet wird, wenn mehr als ein Betriebskennwert die entsprechenden Schwellwerte übersteigt. Es ist zudem auch möglich, dass bereits ein oder mehrere neue Regelparameter von der Datenspeicher- und Rechenvorrichtung 29 an die Ladevorrichtung 22a. 22b, 22c gesendet werden, wenn ein oder mehrere erfasste Betriebskennwerte entsprechende Schwellwerte noch nicht übersteigen, sondern die erfassten Betriebskennwerte lediglich diesen Schwellwerten entsprechen.

Des Weiteren ist es auch möglich, dass anstelle eines oder mehrerer neuer Regelparameter zum Ersetzen der korrespondierenden Regelparameter ein vollständig neuer Regelparametersatz von der Datenspeicher- und Rechenvorrichtung 29 an die Ladevorrichtung 22a. 22b, 22c und schließlich an den Akkumulator 2a, 2b, 2c gesendet wird. Der vollständige neue Regelparametersatz dient zum Ersetzen des bestehenden Regelparametersatzes in dem Akkumulator 2a, 2b, 2c.

Wenn die Ladevorrichtung 22a. 22b, 22c den neuen Regelparameter an den Akkumulator 2a, 2b, 2c gesendet hat und dieser neue Regelparameter den bisher bestehenden korrespondierenden Regelparameter ersetzt hat, wird der eigentliche Ladevorgang unter Berücksichtigung des neuen sowie der weiterhin bestehenden Regelparameter gestartet.

Wenn bei dem Abgleich bzw. Vergleich eines empfangenen Betriebskennwerts mit einem entsprechenden Schwellwert ergibt, dass der Schwellwert weder überschritten noch erreicht wurde, wird kein neuer Regelparameter von der Datenspeicher- und Rechenvorrichtung 29a zu der Ladevorrichtung 22a, 22b, 22c und schließlich zu dem Akkumulator 2a, 2b, 2c gesendet. Als Folge daraus wird der Ladevorgang unter Berücksichtigung des weiterhin bestehenden Regelparameter gestartet.

### Bezugszeichenliste:

- 1a: erste Werkzeugmaschine
- 1b: zweite Werkzeugmaschine
- 1c: dritte Werkzeugmaschine
- 2a: erster Akkumulator
- 2b: zweiter Akkumulator
- 2c: dritter Akkumulator
- 3: Gehäuse
- 3a: vorderes Ende des Gehäuses
- 3b: unteres Ende des Gehäuses
- 4: Gehäuse
- 4a: erstes Ende des Gehäuses
- 4b: zweites Ende des Gehäuses
- 5: Werkzeugaufnahme
- 6: Antrieb
- 7: Getriebevorrichtung
- 8: Abtriebswelle
- 9: Steuerungseinheit
- 10: Speichereinheit der Werkzeugmaschine
- 11: Transceiver der Werkzeugmaschine
- 12: Werkzeugmaschinenschnittstelle
- 13a: Pluskontakt der Werkzeugmaschinenschnittstelle
- 13b: Minuskontakt der Werkzeugmaschinenschnittstelle
- 13c: Kommunikationskontakt der Werkzeugmaschinenschnittstelle
- 14: Betätigungsschalter
- 15: Akku-Gehäuse
- 15a: Deckelelement des Akku-Gehäuses
- 15b: Seitenwand des Akku-Gehäuses
- 15c: Bodenelement des Akku-Gehäuses
- 16: Energiespeicherzellen
- 17: Akku-Schnittstelle
- 18: Speichereinheit des Akkumulators
- 19: Transceiver des Akkumulators
- 20: Steuerungseinrichtung des Akkumulators
- 22a: erste Ladevorrichtung
- 22b: zweite Ladevorrichtung
- 22c: dritte Ladevorrichtung
- 23: Ladergehäuse
- 23a: Deckelelement des Ladergehäuses
- 23b: Seitenwände des Ladergehäuses
- 23c: Bodenelement des Ladergehäuses
- 24: Steuereinheit der Ladevorrichtung
- 25: Transceiver der Ladevorrichtung
- 26: Speichereinheit der Ladevorrichtung
- 27: Energieversorgung der Ladevorrichtung
- 28: Laderschnittstelle
- 28a: Pluskontakt der Laderschnittstelle
- 28b: Minuskontakt der Laderschnittstelle
- 28c: Kommunikationskontakt der Laderschnittstelle
- 29: Datenspeicher- und Rechenvorrichtung
- 30: Sensor zum Erfassen einer Ladestromstärke und Entladestromstärke
- 31: Sensor zum Erfassen einer Ladezeit
- 32: Sensor zum Erfassen eines Beschleunigungswerts und Bremswertes
- 33: Sensor zum Erfassen von Temperaturwerten
- 34: Sensor zum Erfassen von Innenwiderstandswerten
- 35: Sensor zum Erfassen der Kapazität
- 36: Zählwerk
- 37: Transceiver der Datenspeicher- und Rechenvorrichtung
- 38: Recheneinheit der Datenspeicher- und Rechenvorrichtung
- 39: Speichereinheit der Datenspeicher- und Rechenvorrichtung
- S: System

## Patentansprüche

1. Verfahren zum Steuern und Regeln eines Systems (S) enthaltend wenigstens einen ersten Akkumulator (2a) mit einem ersten Transceiver (19) und einer ersten Speichereinheit (18), einen zweiten Akkumulator (2b) mit einem zweiten Transceiver (19) und einer zweiten Speichereinheit (18), eine erste Ladevorrichtung (22a) mit einer dritten Transceiver (25) sowie eine zweite Ladevorrichtung (22b) mit einer vierten Transceiver (25), wobei jeder Akkumulator (2a, 2b) wenigstens einen Sensor (30, 31, 32, 33, 34, 35) zum Erfassen wenigstens eines Parameters enthält,
**gekennzeichnet durch** die Verfahrensschritte
- Erfassen wenigstens eines Betriebskennwertes durch den wenigstens einen Sensor (30, 31, 32, 33, 34, 35) eines jeweiligen Akkumulators (2a, 2b, 2c);
- Verbinden des wenigstens ersten Akkumulators (2a, 2b, 2c) mit der ersten Ladevorrichtung (22a) und Verbinden des wenigstens zweiten Akkumulators (2a, 2b, 2c) mit der zweiten Ladevorrichtung (22b);
- Aussenden wenigstens eines von dem Sensor (30, 31, 32, 33, 34, 35) erfassten Betriebskennwertes des ersten Akkumulators (2a) von dem ersten Akkumulator (2a) an die erste Ladevorrichtung (22a) vor Beginn eines Ladevorgangs sowie Aussenden wenigstens eines von dem Sensor (30, 31, 32, 33, 34, 35) erfassten Betriebskennwertes des zweiten Akkumulators (2b) von dem zweiten Akkumulator (2b) an die zweite Ladevorrichtung (22b) vor Beginn eines Ladevorgangs;
- Senden des wenigstens einen Betriebskennwertes des ersten Akkumulators (2a) von der ersten Ladevorrichtung (22a) an eine Datenspeicher- und Rechenvorrichtung (29) sowie Senden des wenigstens einen Betriebskennwertes des zweiten Akkumulators (2b) von der zweiten Ladevorrichtung (22b) an die Datenspeicher- und Rechenvorrichtung (29);
- Vergleichen der Parameter des ersten und zweiten Akkumulators (2a, 2b) mit in der Datenspeicher- und Rechenvorrichtung (29) gespeicherten Schwellwerten;
- Vergleichen der jeweiligen Betriebskennwerte mit einem in der Datenspeicher- und Rechenvorrichtung (29) gespeicherten Schwellwert;
- Senden wenigstens eines zweiten Regelparameters von der Datenspeicher- und Rechenvorrichtung (29) über die Ladevorrichtung (22a, 22b) zu dem ersten und/oder zweiten Akkumulator (2a, 2b) zum Ersetzen eines entsprechend in dem ersten und/oder zweiten Akkumulator (2a, 2b) gespeicherten ersten Regelparameters, wenn für eine vorbestimmte Zeitdauer und Menge wenigstens ein Betriebskennwert einen in der Datenspeicher- und Rechenvorrichtung (29) gespeicherten Schwellwert übersteigt; und
- Laden wenigstens eines Akkumulators (2a, 2b, 2c) mit elektrischer Energie durch die Ladevorrichtung (22a, 22b, 22c) mit wenigstens dem zweiten Regelparameter.

2. Verfahren nach Anspruch 1,
**gekennzeichnet durch** den Verfahrensschritt
- Aussenden wenigstens eines ersten Regelparameters des Akkumulators (2a, 2b, 2c) von dem Akkumulator (2a, 2b, 2c) an die Ladevorrichtung (22a, 22b, 22c) vor Beginn eines Ladevorgangs.

3. Verfahren nach Anspruch 1 oder 2,
**gekennzeichnet durch** den Verfahrensschritt
- Verbinden des wenigstens ersten oder zweiten Akkumulator (2a, 2b) mit einer Werkzeugmaschine (1a, 1b);
- Versorgen der Werkzeugmaschine (1a, 1b) mit elektrischer Energie durch ein Entladen des wenigstens ersten oder zweiten Akkumulator (2a, 2b) mit wenigstens dem zweiten Regelparameter.

4. System (S) zur Durchführung des Verfahrens nach wenigstens einem der Ansprüche 1 bis 3 enthaltend wenigstens einen ersten und zweiten Akkumulator (2a, 2b), wenigstens eine erste und zweite Ladevorrichtung (22a, 22b) sowie wenigstens eine erste und zweite Werkzeugmaschine (1a, 1b), wobei der erste und zweite Akkumulator (2a, 2b) jeweils einen ersten Transceiver (19) und eine erste Speichereinheit (18), die erste und zweite Ladevorrichtung (22a, 22b) jeweils einen zweiten Transceiver (25) und eine zweite Speichereinheit (26) sowie die erste und zweite Werkzeugmaschine (1a, 1b) jeweils einen dritten Transceiver (11) und eine dritte Speichereinheit (10) enthält.
